(19) Europäisches Patentamt
European Patent Office
Office européen des brevets

(11) EP 0 451 769 B1

(12) **EUROPEAN PATENT SPECIFICATION**

(45) Date of publication and mention of the grant of the patent: **18.09.1996 Bulletin 1996/38**

(51) Int Cl.6: **C08L 67/03**, C08L 77/00, C08L 23/02, C08L 51/00, C08L 63/00, C08K 5/15

(21) Application number: **91105562.2**

(22) Date of filing: **09.04.1991**

(54) **Thermoplastic resin composition**

Thermoplastische Harzzusammensetzung

Composition de résine thermoplastique

(84) Designated Contracting States:
**BE DE FR GB IT**

(30) Priority: **10.04.1990 JP 96125/90**
**10.04.1990 JP 96126/90**
**20.04.1990 JP 107741/90**

(43) Date of publication of application:
**16.10.1991 Bulletin 1991/42**

(73) Proprietor: **KANEGAFUCHI KAGAKU KOGYO KABUSHIKI KAISHA**
**Kita-ku Osaka-shi (JP)**

(72) Inventors:
- **Tomita, Haruo**
  **Kode-shi, Hyogo-ken (JP)**
- **Yamashita, Kouichi**
  **Kobe-shi, Hyogo-ken (JP)**
- **Suzuki, Noriyuki**
  **Kobe-shi, Hyogo-ken (JP)**
- **Asada, Masahiro**
  **Kobe-shi, Hyogo-ken (JP)**
- **Matsumoto, Shigemi**
  **Akashi-shi, Hyogo-ken (JP)**
- **Kondo, Takeshi**
  **Kobe-shi, Hyogo-ken (JP)**

(74) Representative: **Hrabal, Ulrich, Dr. et al**
**Türk, Gille, Hrabal, Leifert**
**Brucknerstrasse 20**
**40593 Düsseldorf (DE)**

(56) References cited:

| | |
|---|---|
| EP-A- 0 227 053 | EP-A- 0 247 357 |
| EP-A- 0 301 663 | EP-A- 0 333 002 |
| EP-A- 0 338 544 | WO-A-88/03152 |
| FR-A- 2 439 800 | US-A- 4 861 828 |

EP 0 451 769 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a thermoplastic resin composition, which is used for molding. More particularly, the present invention relates to a thermoplastic resin composition which is excellent in impact resistance, especially high speed punching impact resistance, surface appearance, dimensional stability under humidity, and weld line strength, thermal stability in a molten state, heat distortion resistance, chemical resistance and molding processability. The composition of the present invention is a composition comprising a polyarylate having a specific functional group, a polyamide and an impact modifier.

A polyarylate is one of engineering plastics prepared from an aromatic dicarboxylic acid or the derivative thereof, and a bisphenol or the derivative thereof. It has been known that the polyarylates have high heat distortion temperature and high heat decomposition temperature.

Also, it is expected that a resin composition comprising a polyarylate and a polyamide gives a molding material having excellent balance of physical properties, in other words, both advantages of the polyamide, namely excellent moldability and chemical resistance, and the polyarylate, namely excellent heat distortion resistance. Japanese Examined Patent Publication No. 14699/1981 and Japanese Unexamined Patent Publication No. 98765/1977 discloses the usefulness of such resin compositions.

However, resin compositions comprising only the polyarylate and the polyamide are poor in impact resistance. For improving the poor impact resistance, there have been proposed various method using an impact modifier. A method using a specific modified polyolefin is disclosed in, for instance, Japanese Examined Patent Publication No. 944/1987, Japanese Unexamined Patent Publication No. 183353/1986, Japanese Unexamined Patent Publication No. 277462/1987, Japanese Unexamined Patent Publication No. 283146/1987, and the like.

When the specific, modified polyolefin is used as the impact modifier, as discussed in the above-mentioned publications, though Izod impact strength is improved, the high speed punching impact resistance, which is more important in practical use, is low. Particularly, the high speed punching impact resistance is remarkably low at a low temperature such as about -30°C . This defect is a great obstacle to utilize the composition for uses requiring to have the high impact resistance at a low temperature such as an outside panel of automobiles.

Further, it is general that when the modified polyolefin is used, the molded article is bad in surface appearance, that is, it has silver marks, flow marks, and the like on its surface, and has poor weld line strength.

Moreover, a molded article prepared from the polyamide is greately changed in dimension under humidity, in other words, it is poor in dimensional stability under humidity. The molded article prepared from the compositin comprising the polyarylate and the polyamide has the same defect as above.

Furthermore, it is general that the composition comprising the polyarylate and the polyamide is poor in thermal stability in a molten state at a high temperature, for instance, in the case of injection molding. For instance, if the composition stays in a cylinder of molding machine for a long time of period, the viscosity is lowered and the physical properties of the molded article are lowered.

The composition comprising a polyarylate, a polyamide and an impact modifier is, generally, insufficient in molding processability. When using the polyarylate having a high glass transition temperature in order to improve the heat distortion resistance, the impact resistance is lowered or the molding processability becomes worse.

An object of the present invention is to provide a thermoplastic resin composition which is excellent in high speed punching impact resistance, surface appearance, weld line strength and dimensional stability under humidity.

A further object of the present invention is to provide a thermoplastic resin composition which is excellent in thermal stability in a molten state as well as excellent in high speed punching impact resistance, surface appearance, weld line strength and dimensional stability under humidity.

A still further object of the present invention is to provide a thermoplastic resin composition which is improved in heat distortion resistance as well as excellent in impact resistance, chemical resistance and molding processability (defects such as coloring, flow marks, and silver marks are decreased and molded articles having excellent surface appearance and excellent physical properties are obtained).

These and other objects of the present invention will become apparent from the description hereinafter.

It has now been found that, in a composition comprising a polyarylate, a polyamide and an impact modifier, when a polyarylate having a specific functional group is used or when an epoxy group-containing compound is further added to the composition, the above-mentioned objects can be attained.

In accordance with the present invention, there is provided a thermoplastic resin composition comprising (A) 100 parts by weight of a resin composition of 20 to 80 % by weight of a polyarylate having an acid chloride value of 2 x $10^{-6}$ to 50 x $10^{-6}$ equivalent/g and 80 to 20 % by weight of a polyamide, and (B) 1 to 40 parts by weight of an impact modifier. Thus, by using the polyarylate having the specific functional group, all disadvantages in known resin compositions comprising the polyarylate, the polyamide and the impact modifier can be solved.

Further, by using the polyarylate having the specific functional group and further adding the epoxy group-containing compound to the above-mentioned composition, the obtained composition is improved in all of the conventional defects

and further improved in thermal stability in a molten state at a high temperature.

The polyarylates used in the present invention are aromatic polyesters prepared from a bisphenol compound and/or its derivative, and an aromatic dicarboxylic acid and/or its derivative. In the present invention, the aromatic polyesters can be used without any restriction, for instance, the main chain structure is not particularly limited, so long as the polyester has acid chloride group.

If it is desirable to have excellent heat distortion resistance, it is preferable to use the polyarylate having acid chloride group and a glass transition temperature of not lower than 190°C.

As the bisphenol compounds, there are exemplified, for instance, compounds having the formula (I):

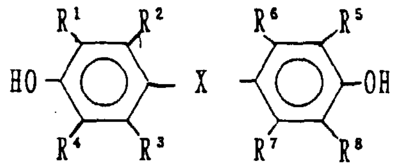

(I)

wherein X is -O-, -S-, -SO-, $-SO_2-$, -CO-, an alkylene group having 1 to 20 carbon atoms or an alkylidene group having 1 to 20 carbon atoms, and $R^1$, $R^2$, $R^3$, $R^4$, $R^5$, $R^6$, $R^7$ and $R^8$ are the same or different and each is hydrogen atom, a halogen atom or a hydrocarbon group having 1 to 20 carbon atoms; and the like. The bisphenol compounds (I) are preferable from the viewpoints of moldability, heat resistance and impact resistance.

Examples of the bisphenol compounds are, for instance, 2,2-bis(4-hydroxyphenyl)propane (Bisphenol A), bis(4-hydroxyphenyl)methane, bis(4-hydroxy-3,5-dimethylphenyl)methane, bis(4-hydroxy-3,5-dichlorophenyl)methane, 1,1-bis(4-hydroxyphenyl)-cyclohexyl methane, 1,1-bis(4-hydroxyphenyl)ethane, bis(4-hydroxyphenyl)phenylmethane, 4,4'-dihydroxydiphenylether, bis(4-hydroxy-3,5-dimethylphenyl)ether, bis(4-hydroxyphenyl)sulfone, bis( 4-hydroxy-3,5-dimethylphenyl)sulfone, 4,4'-dihydroxybenzophenone, 2,2-bis(4-hydroxy-3,5-dimethylphenyl)propane, bis(4-hydroxyphenyl)sulfide, bis(4-hydroxyphenyl)ketone, 1,1-bis(4-hydroxyphenyl) phenyl ethane, bis(4-hydroxyphenyl) diphenyl methane, 2,2-bis(4-hydroxy-3,5-dichlorophenyl)propane, bis(4-hydroxyphenyl)cyclohexyl methane, 1,1-bis (4-hydroxyphenyl)cyclohexane, 2,2-bis(4-hydroxynaphthyl) propane, and the like. From the viewpoints of heat distortion resistance, impact resistance and moldability, 1,1-bis(4-hydroxyphenyl)phenyl ethane and 2,2-bis(4-hydroxyphenyl)propane are particularly preferable.

Examples of the derivatives of the bisphenol compounds are, for instance, alkali metal salts of the bisphenol compounds, diacetates of the bisphenol compounds, and the like.

The bisphenol compound and/or its derivative may contain, if necessary, a divalent compound such as 4,4'-biphenol (4,4'-dihydroxybiphenyl), hydroquinone, resorcinol or 2,6-dihydroxynaphthalene, in a small amount, for instance, not more than about 20 % by weight of the phenol component.

Examples of the aromatic dicarboxylic acids are for instance, terephthalic acid, isophthalic acid, diphenylether-4,4'-dicarboxylic acid, benzophenone-4,4'-dicarboxylic acid, naphthalene-2,6-dicarboxylic acid, and the like. Among them, isophthalic acid and terephthalic acid are preferable from the viewpoints of moldability, heat resistance, impact resistance and heat distortion resistance. It is more preferable that the weight ratio of isophthalic acid to terephthalic acid in the polymer is from 10/0 to 7/3.

Examples of the derivatives of aromatic dicarboxylic acids are, for instance, dihalides such as dichloride of the aromatic dicarboxylic acid, diesters such as a dialkyl ester and a diaryl ester of the aromatic dicarboxylic acid; and the like.

The polyarylate used in the present invention can be prepared from the bisphenol compound and/or its derivative, and the aromatic dicarboxylic acid and/or its derivative in any polymerization method such as interfacial polycondensation, solution polymerization or melting polymerization. It is essential that the polyarylate used in the present invention has acid chloride group. By using such a polyarylate, the effects that the molded articles from the composition of the present invention are excellent in impact resistance, rigidity and surface appearance.

Also, in order to effectively improve the heat distortion resistance of the molded article from the composition of the present invention, it is preferable to use the polyarylate having a glass transition temperature (Tg) of not lower than 190°C, more preferably not lower than 195°C. Tg is measured by using a differential scanning calorimeter at a heating rate of 10°C /minute.

A method for introducing acid chloride group into the polyarylate is not particularly limited, and any methods can be applied. For instance, a dichloride of aromatic dicarboxylic acid is polymerized with a bisphenol compound in excess amount to the amount of bisphenol in interfacial polycondensation to easily give the polyarylate having acid chloride group. According to such a polycondensation, acid chloride group is introduced into the polymer ends.

In order to effectively exhibit the effects that the molded article prepared from the composition of the present invention are excellent in impact resistance, especially high speed punching impact resistance, surface appearance, dimensional stability under humidity and weld line strength, it is essential that the polyarylate has an acid chloride value

of $2 \times 10^{-6}$ to $50 \times 10^{-6}$ equivalent/g. Further, it is preferable that the polyarylate has acid chloride group at the polymer ends, because the polyarylate having acid chloride group at the polymer ends can remarkably exhibit the above-mentioned effects.

It is preferable that the polyarylate has an acid chloride value of $5 \times 10^{-6}$ to $30 \times 10^{-6}$ equivalent/g, more preferably from $5 \times 10^{-6}$ to $20 \times 10^{-6}$ equivalent/g. The term "acid chloride value (equivalent/g)" used herein means moles of acid chloride groups per weight of the polyarylate. The acid chloride value is calculated by the following equation:

$$\text{Acid chloride value } (\times 10^{-6} \text{ equivalent/g}) =$$

$$\{(Ts\text{-}Tb) \times \frac{0.1 \times F}{1000} \times 10^{6}\} / W$$

wherein Ts is an amount of 0.1 N tributylamine consumed in titration ($m\ell$), Tb is an amount of 0.1 N tributyl amine consumed in blank test ($m\ell$), F is a titrimetric factor of 0.1 N tributyl amine, and W is a weight of a sample (g).

When the acid chloride value is less than $2 \times 10^{-6}$ equivalent/g, it tends to lower the high speed punching impact resistance, weld line strength, moldability and surface appearance. On the other hand, when the acid chloride value is more than $50 \times 10^{-6}$ equivalent/g, it tends to lower the high speed punching impact resistance and heat resistance.

The reason why the polyarylate having acid chloride group, preferably at the polymer ends, can exhibit the excellent effects is not clear. It is observed, however, that when the polyarylate is mixed with the polyamide, the sizes of parts of polyarylate particles dispersed in polyamide particles are very small and the polyarylate particles are uniformly dispersed in polyamide particles, compared to the polyarylate having no acid chloride group. Accordingly, it could be assumed that, in the composition of the present invention, the surface between the polyarylate particle and the polyamide particle is specially stable.

It is beyond expection and is surprising that a number of defects of the known resin compositions comprising the polyarylate, the polyamide and the impact modifier can be solved by using the polyarylate having the specific functional group. Also, such effects exerted by acid chloride group of the polyarylate have not hitherto been known.

The effects of the present invention are sufficiently exhibited by using the polyarylate having acid chloride group. Further, the effects can be remarkably exhibited by using the polyarylate having carboxyl group in addition to acid chloride group.

The amount of carboxyl group is usually expressed by an acid value. According to the method for measuring the acid value of the polyarylate as mentioned below, the obtained value is the total of the carboxyl group and the acid chloride group. Accordingly, in the present invention, the acid value is the total of the acid chloride value and the carboxylic acid value.

It is preferable that the polyarylate has an acid value of $30 \times 10^{-6}$ to $100 \times 10^{-6}$ equivalent/g, more preferably from $40 \times 10^{-6}$ to 70 to $10^{-6}$ equivalent/g.

It is preferable that the polyarylate having acid chloride group has an intrinsic viscosity (in chloroform, at 30°C ) within the range of 0.2 to 1.5, more preferably from 0.4 to 0.8. When the intrinsic viscosity of the polyarylate is less than 0.2 or more than 1.5, it tends to lower the high speed punching impact resistance or the moldability.

The preparation method of the polyarylate is more specifically explained.

The polyarylate used in the present invention can be prepared from the bisphenol compound and/or its derivative, and the aromatic dicarboxylic acid and/or its derivative in any method such as interfacial polymerization and solution polymerization. Among them, the interfacial polymerization is preferable. According to the interfacial polymerization, the polyarylate is prepared by contacting an aqueous solution containing the bisphenol compound and at least one member selected from a hydroxide of alkali metal, carbonate of alkali metal, hydrogencarbonate of alkali metal, phosphate of alkali metal, hydroxide of alkaline earth metal, carbonate of alkaline earth metal, hydrogencarbonate of alkaline earth metal and phosphate of alkaline earth metal with an organic solution containing the aromatic dicarboxylic acid chloride and an organic solvent incompatible with the aqueous solution. In such a polymerization, if necessary, a monovalent phenol compound such as phenol or p-t-butyl phenol can be used as an agent for controlling the molecular weight.

The polyarylate having acid chloride group can be prepared in any methods. For instance, according to the interfacial polymerization, the aromatic dicarboxylic acid dichloride is polymerized with the bisphenol compound and the monovalent phenol compound used as occasion demands in an excess equivalent amount to give the desired polyarylate. Concretely, the aromatic dicarboxylic acid dichloride is polymerized with the bisphenol compound and the monovalent phenol compound used as occasion demand so that the amount (equivalent) of the acid chloride groups of the aromatic dicarboxylic acid dichloride is from 0.5 to 10 % by equivalent excess, preferably from 1 to 5 % by equivalent excess, more preferably from 2 to 5 % by equivalent excess to the equivalent of the total hydroxyl groups of the bisphenol compound and the monovalent phenol compound used as occasion demand to give easily the desired polyarylate. When the excess amount is less than 0.5 % by equivalent, the acid chloride value of the obtained polyarylate is lowered, so the effects of the present invention cannot be sufficiently exhibited. On the other hand, when the excess amount is more than 10 % by equivalent, the acid chloride value is so high that the molecular weight is lowered or the polymerization is unstable.

Examples of the organic solvents are, for instance, methylene chloride, 1, 2-dichloroethane, chloroform, trichloroethane, tetrachloroethane, chlorobenzene, o-dichlorobenzene, and the like.

In the polymerization, a polymerisation catalyst can be used as occasion demands. Examples of the polymerisation catalysts are, for instance, tertiary amines such as triethylamine and tripropylamine; quaternary ammonium compounds such as tetraethyl ammonium bromide, benzyl trimethyl ammonium chloride, benzyl triethyl ammonium chloride and benzyl tributyl ammonium chloride; phosphonium compound such as n-butyltriphenyl phosphonium bromide; and the like. It is desirable that the amount of the polymerization catalyst is not more than 5 % by mole of the total moles of the bisphenol compound and the monovalent phenol compound.

Further, if necessary, an additive such as an antioxidant, a reducing agent or an ultraviolet absorber can be used.

The polymerisation time of the polyarylate varies depending on the kinds of the bisphenol compound or the polymerization temperature, and is not decided in general. Usually, the time is within the range of several minutes to several hours.

The polymerization temperature is preferably not more than 60°C , more preferably from 5° to 30°C.

Adding method for the monomers is not particularly limited. It is possible to add the organic solution to the aqueous solution or to add the aqueous solution to the organic solution. It is preferable that both the aqueous solution and the organic solution are added to a reaction vessel simultaneously, from the viewpoint of obtaining of the desired polyarylate, because the amount of acid chloride groups of the dicarboxylic acid chloride is always maintained excess to the total amount of hydroxyl groups of the bisphenol compound and the monovalent phenol compound in the polymerization system.

Since the polymerization is conducted by contacting mutually the aqueous solution with the organic solution, it is necessary that the aqueous solution and the organic solution, which are incompatible with each other, are uniformly dispersed under thoroughly stirring conditions.

In the polymerization, a dispersing agent may be used. As the dispersing agent, various surfactants are exemplified.

The polymerization reaction is conducted in the state of an emulsion. After completing the polymerization, the emulsion is allowed to stand to separate it into the aqueous layer and the organic layer containing the polymer, or is mechanically separated into the two layers. The obtained organic layer containing the polymer is neutralized, filtered, extracted or washed, as occasion demands. Then, the desired polymer is obtained by adding the organic layer to a bad solvent such as acetone or methanol to precipitate the polymer, removing the solvent by means of a thin film evaporater or adding an aqueous solution containing a dispersing agent such as polyvinyl alcohol to dispersion-concentrate.

The polyamide used in the present invention comprises, for instance, not less than 90 % by weight of units of aliphatic amino acid, lactam or diamine and units of dicarboxylic acid as the main structural components.

Examples of important components composing of the polyamide are, for instance, amino acids such as 6-aminocaproic acid, 11-aminoundecanoic acid and 12-aminododecanoic acid; lactams such as ε -caprolactam and ω -laurolactam; diamines such as tetramethylenediamine, hexamethylenediamine, undecamethylenediamine and dodecamethylenediamine; dicarboxylic acids such as adipic acid, azelaic acid, sebacic acid, dodecanedioic acid and diglycollic acid; and the like.

The polyamide used in the present invention is, for instance, prepared by polymerizing a monoamino-monocarboxylic acid having at least two carbon atoms between amino group and carboxyl group or its lactam, by polymerizing a dicarboxylic acid with a substantially equal molar ratio to the dicarboxylic acid of a diamine having at least two carbon atoms between amino groups, by polymerizing a diamine with a dicarboxylic acid in a substantially equal molecular ratio in the presence of a monoamino- monocarboxylic acid or its lactam, or the like.

As the preferable diamine used in the preparation of polyamide, there is exemplified a diamine having the formula:

$$H_2N\text{-}(CH_2)_n\text{-}NH_2$$

wherein n is an integer of 2 to 16.

As the dicarboxylic acid used in the preparation of polyamide, there is exemplified a dicarboxylic acid having the formula:

$$HOOC\text{-}R\text{-}COOH$$

wherein a bivalent aliphatic group containing at least two carbon atoms, an aromatic dicarboxylic acid such as isophthalic acid or terephthalic acid, and the like.

In addition to the aliphatic polyamide, copolymerizated polyamides having a small amount such as not more than 20 % by weight, of an aromatic component or an alicyclic component can be used.

Examples of the useful polyamides used in the present invention are, for instance, polycaproamide (nylon 6), polyhexamethyleneadipoamide (nylon 66), polytetramethyleneadipamide (nylon 46), polydodecaneamide (nylon 12), nylon 4, nylon 612, a polyamide derived from terephthalic acid and trimethylhexamethylenediamine, a polyamide derived from at least one of adipic acid and azelaic acid, and 2,2-bis(4-aminocyclohexyl)propane, a polyamide derived

from terephthalic acid and isophthalic acid, and 4,4'-diaminodicyclohexylmethane or methaxylenediamine, and the like. Among them, nylon 6, nylon 66 and nylon 46 are more preferable because the moldability of the obtained composition and the heat resistance of the molded article therefrom are well-balancedly improved and the impact resistance, the heat distortion resistance, the chemical resistance and the molding processability are further improved.

In the present invention, there can be used an amorphous polyamide prepared from a mixture of a diamine such as hexamethylenediamine and isophthalic acid and/or terephthalic acid.

It is preferable that as the molecular weight, the polyamide has a relative viscosity of 2.0 to 5.0 dℓ /g in a 1 % concentrated sulfuric acid solution at 25°C from the viewpoint of the balance between the impact resistance and the moldability. When the relative viscosity is less than 2.0 dℓ /g or more than 5.0 dℓ /ℓ , the high speed punching impact resistance or the moldability is lowered.

Also, it is preferable that the polyamide has an amine value (which is measured by a method wherein, in an atmosphere of nitrogen, a sample is dissolved in m-cresol at 80°C and the solution is titrated with a 0.1 N solution of sodium p-toluenesulfonate, using Thymol Blue as the indicator) of $10 \times 10^{-6}$ to $100 \times 10^{-6}$ equivalent/g. When the amine value is less than $10 \times 10^{-6}$ equivalent/g or more than $100 \times 10^{-6}$ equivalent/g, it tends to lower the impact resistance and the thermal stability of the molded article, and it is easy that the molded article has defects such as flow marks on its surface.

In the present ivention, there are used the modified olefin polymer (B-1) and the graft polymer such as the core shell graft polymer (B-2) as the impact modifier (B).

Examples of the main structural components (for instance, the modified polyolefin comprises 99.9 to 70 % by weight of the main structural components) of the modified polyolefin (B-1) are, for instance, an α-olefin having 2 to 30 carbon atoms, a diene having 2 to 30 carbon atoms, and the like. Concretely, there exemplified ethylene, propylene, 1-butene, 4-methylpentene-1, isobutylene, 1,4-hexadiene, dicyclopentadiene, 2,5-norbornadiene, 5-ethylidenenorbornene, butadiene, isoprene, and the like. Further, the polyolefin is modified with a monomer which has at least one functional group selected from carboxyl group, a methallic salt of carboxyl group, a carboxylic ester group, an acid anhydride group, an epoxy group, an acid amide group and an imide group. The modified polyolefin (B-1) is obtained by introducing the monomer having the functional group into the polyolefin in a manner such as copolymerization and graft polymerization.

As the modified polyolefin capable of remarkably exhibiting the effects of the present invention, an acid anhydride group-containing olefin polymer, an epoxy group-containing olefin polymer and the mixture thereof are exemplified. Particularly, the mixture of the acid anhydride group-containing olefin polymer and the epoxy group-containing olefin polymer can attain the objects of the present invention at the highest level.

When the mixture of the acid anhydride group-containing olefin polymer and the epoxy group-containing olefin polymer is used as the modified polyolefin (B-1), it is preferable that 0.8 to 30 parts by weight, more preferably from 5 to 15 parts by weight, of the acid anhydride group-containing olefin polymer is used along with 0.2 to 10 parts by weight, more preferably from 0.2 to 3 parts by weight, of the epoxy group-containing olefin polymer, the total parts by weight being 1 to 40 parts by weight based on 100 parts by weight of the resin composition (A).

There is preferable as the acid anhydride group-containing olefin polymer, for instance, a polymer wherein an alicyclic dicarboxylic anhydride having cis-form double bond in its ring or an α,β-unsaturated dicarboxylic anhydride is copolymerized with or graft-polymerized onto a homopolymer of an olefin compound such as polyethylene, polypropylene or polybutene-1, copolymer such as ethylene-propylene copolymer, ethylene-butene-1 copolymer or ethylene-vinyl acetate copolymer or ethylene-propylene-diene terpolymer.

Examples of the alicyclic dicarboxylic anhydrides having cis-form double bond in its ring are, for instance, cis-4-cyclohexene-1,2-dicarboxylic anhydride, endo-bicyclo-[2,2,1]-5-heptene-2,3-dicarboxylic anhydride, and the like. Also, examples of the α,β-unsaturated dicarboxylic anhydrides are, for instance, maleic anhydride, methylmaleic anhydride, chloromaleic anhydride, citraconic anhydride, and the like.

If necessary, the acid anhydride group-containing olefin polymer may contain as the copolymerizable component a methacrylic ester such as methyl methacrylate or ethyl methacrylate, an acrylic ester such as methyl acrylate, ethyl acrylate or butyl acrylate, and the like.

When using the modified polyolefin wherein the alicyclic dicarboxylic anhydride or the α,β-unsaturated dicarboxylic anhydride is copolymerized with or graft polymerized onto the polyolefin, it is preferable that the modified polyolefin contains 0.01 to 10 % by weight, more preferably from 0.1 to 5 % by weight of the alicyclic dicarboxylic anhydride or α,β-unsaturated dicarboxylic anhydride. When the amount is outside the above-mentioned range, it tends to lower the impact resistance or the surface appearance.

Among the acid anhydride group-containing olefin polymers, ethylene-propylene copolymer on which maleic anhydride is grafted is particularly effective from the viewpoint of attaining of the objects of the present invention.

There is preferable as the epoxy group-containing olefin polymer, a polymer wherein an epoxy compound having an unsaturated group is copolymerized with or graft polymerized on a homopolymer of olefin compound such as polyethylene, polypropylene or polybutene-1, a copolymer such as ethylene-propylene copolymer, ethylene-butene-1 copolymer, or ethylene-vinyl acetate copolymer, or ethylene-propylene-diene terpolymer.

Examples of the epoxy compounds having the unsaturated group are, for instance, glycidyl methacrylate, monoglycidyl ether itaconate, p-glycidyl styrene, p-glycidyl oxystyrene, allyl glycidyl ether, and the like.

The epoxy group-containing olefin polymer may contain, if necessary, as the copolymerizable component a methacrylic ester such as methyl methacrylate or ethyl methacrylate, an acrylic ester such as methyl acrylate, ethyl acrylate or butyl acrylate, and the like. Particularly, a polymer of ethylene, an alkyl acrylate and glycidyl methacrylate is effective from the viewpoint of exhibition of impact resistance and surface appearance.

Also, there is effective a polymer formed by introducing a grafted chain comprising a vinyl polymer into the epoxy group-containing olefin polymer, particularly ethylene-glycidyl methacrylate copolymer (hereinafter referred to as "polymer having grafted chain") for attaining the objects of the present invention. The number average degree of polymerization of the grafted chain is preferably 10 to 10000. Preferable examples of the grafted chain are, for instance, homopolymers or copolymers of at least one of styrene, acrylonitrile, methyl methacrylate and butyl acrylate, and the like. Among the polymers having grafted chain, in particular, a graft polymer wherein methyl methacrylate or acrylonitrile-styrene is graft polymerized onto ethylene-glycidyl methacrylate copolymer is effective.

As the epoxy group-containing olefin polymer, in the present invention, it is possible to use copolymers comprising units of at least one monomer selected from styrene, methyl methacrylate, ethyl acrylate, butyl acrylate, acrylonitrile and vinyl acetate, and units of an epoxy compound having an unsaturated group such as glycidyl methacrylate.

It is preferable that the modified polyolefin has 0.01 to 50 % by weight, more preferably from 1 to 15 % by weight of the epoxy compound having unsaturated grop. When the amount is outside the above-mentioned range, it tends to lower the impact resistance or surface appearance.

It is necessary that the modified olefin polymer (B-1) has a number average molecular weight of not less than 10000, in order to give the impact resistance. For obtainig the excellent moldability as well as the excellent impact resistacne, it is general that the modified olefin polymer (B-1) has a melt index of 0.05 to 50 g/10 minutes, preferably from about 0.1 to 30 g/10 minutes.

Examples of the monomers containing functional group in the modified polyolefin (B-1) are, for instance, (meth)acrylic acid, maleic acid, fumaric acid, itaconic acid, methyl maleate, methyl (meth)acrylate, ethyl acrylate, 2-ethylhexyl (meth)acrylate, aminoethyl methacrylate, dimethyl maleate, sodium (meth)acrylate, potassium (meyh)acrylate, magnesium (meth)acrylate, zinc methacrylate, maleic anhydride, itaconic anhydride, glycidyl (meth)acrylate, allyl glycidyl ether, (meth)acrylamide, maleinimide, phenyl maleinimide, and the like.

As a method for introducing the functional group-containing component into the olefin polymer to give the impact modifier, there are exemplified a copolymerization with the $\alpha$-olefin, a graft polymerization onto the polyolefin.

It is preferable that the modified polyolefin has 0.1 to 30 % by weight of the functional group-containing component. If the amount is outside the above-mentioned range, it tends to lower the impact resistance or the molding processability.

The core shell graft polymer (B-2) is a rubber-like elastomer on which a graft component as mentioned below is graft polymerized. It is preferable that the elastomer has Tg of not more than 0°C, more preferably not more than -40°C. Examples of the elastomers are, for instance, a diene rubber such as polybutadiene, butadiene-styrene copolymer or butadiene-butyl acrylate copolymer, an acrylic rubber such as butyl polyacrylate or 2-ethylhexyl polyacrylate, an olefin rubber such as ethylene-propylene copolymer or ethylene-propylene-diene terpolymer, and the like.

The gel content of the elastomer is not particularly limited. It is preferable that the elastomer has a gel content of not less than 10 % by weight. The elastomer can be in any state such as powder, pellet or latex. It is preferable that the latex has a particle size of 0.05 to 2 μm.

The graft component in the core shell graft polymer (B-2) is a component comprising a vinyl monomer and a monomer containing at least one functional group selected from carboxyl group, carboxylate group, acid anhydride group, epoxy group, imide group and acid amide group.

Examples of the vinyl monomers are, for instance, aromatic vinyl monomers such as styrene, methylstyrene, chlorostyrene and $\alpha$-methylstyrene; vinyl cyanide such as (meth)acrylonitrile ; and the like.

Examples of the monomers containing functional group are, for instance, (meth)acrylic acid, maleic acid, fumaric acid, itaconic acid, methyl acrylate, ethyl acrylate, butyl acrylate, 2-ethylhexyl acrylate, maleic anhydride, itaconic anhydride, glycidyl (meth)acrylate, (meth)acrylamide, maleinimide, phenyl maleinimide, and the like.

The composition ratio of the graft component in the core shell graft polymer (B-2) is not particularly limited. It is preferable that the graft component has 50 to 99.9 % by weight of the vinyl monomer component and 0.1 to 50 % by weight of the functional group-containing monomer component.

Further, the composition ratio of the vinyl monomer component is not particularly limited. It is preferable that the vinyl monomer component has 40 to 90 % by weight of an aromatic vinyl monomer and 10 to 60 % by weight of a vinyl cyanide monomer.

It is preferable that the core shell graft polymer has 30 to 95 % by weight of the rubber-like elastomer and 5 to 70 % by weight of the graft component.

Among the core shell graft polymers (B-2), an epoxy group-containing graft copolymer is preferable from the viewpoints of impact resistance and surface appearance.

The core shell graft polymer (B-2) has the graft component having a number average molecular weight of not less than 10,000.

The core shell graft polymer can be prepared in any manner such as solution polymerization, suspension polymerization, bulk polymerization or emulsion polymerization without any limitation.

In the present invention, in order to prevent the lowering of the viscosity of the composition or lowering of the physical properties of the molded article when the composition stays in molten state, the epoxy group-containing compound (C) is used. The compound (C) is different from the epoxy group-containing olefin polymer used as the impact modifier (B) in both structure and action. That is, the epoxy group-containing compound (C) is a low molecular weight compound having an epoxy group, which has a number average molecular weight of not more than 2000. Examples of the epoxy group-containing compound (C) are, for instance, a bisphenol A epoxy resin, a glycidyl ether of phenol compound such as phenyl glycidyl ether, a diglycidyl ether of glycol compound, a novolak epoxy resin, a glycidyl ether of alcohol such as a long chain alcohol, an alicyclic epoxy resin, a glycidyl ester of aliphatic carboxylic acid, and the like.

It is preferable that the epoxy group-containing compound (C) has an epoxy equivalent of 100 to 2000 g/equivalent, more preferably from 150 to 1000 g/equivalent because thermal stability in molten state is remarkably improved. For instance, a bisphenol A epoxy resin having an epoxy equivalent of 150 to 1000 g/equivalent is preferable.

The thermoplastic resin composition of the present invention comprises (A) 100 parts by weight of a resin composition of 20 to 80 % by weight, preferably from 25 to 70 % by weight, more preferably from 30 to 60 % by weight of the polyarylate and 80 to 20 % by weight, preferably from 70 to 25 % by weight, more preferably from 70 to 40 % by weight of the polyamide, (B) 1 to 40 parts by weight, preferably 3 to 20 parts by weight of the impact modifier. The composition can further comprises (C) 0.1 to 10 parts by weight, based on 100 parts by weight of the resin composition (A), preferably 0.5 to 5 parts by weight of the epoxy group-containing compound (C).

When the amount of the polyarylate in the resin composition (A) is less than 20 % by weight, the heat resistance, the dimension stability under humidity and the rigidity under humidity or at a high temperature are lowered. On the other hand, when the amount of the polyarylate is more than 80 % by weight, the flowability at molding, the chemical resisance and the impact resistance are lowered.

When the amount of the impact modifier (B) is less than 1 part by weight based on 100 parts by weight of the resin composition (A), the impact resistance is lowered. When the amount of the impact modifier (B) is more than 40 parts by weight, the heat resistance, strength, heat distortion resistance, chemical resistance, rigidity or surface appearance is lowered.

Also, when the amount of the epoxy group-containing compound (C) is less than 0.1 part by weight based on 100 parts by weight of the resin composition (A), the thermal stability in the molten state is not improved. When the amount of the compound (C) is more than 10 parts by weight, the impact resistance is lowered.

The method for preparing the resin composition of the present invention is not limited in particular. A melt-mixing method is preferable. For instance, there is a method using an extruder, heat roller, Brabender, Banbury mixer, and the like. For instance, when preparing the composition comprising the resin composition (A), the impact modifier (B), and the epoxy group-containig compound (C), after melt-mixing the polyarylate with the polyamide, or melt-mixing the polyarylate with the polyamide and the impact modifier, the epoxy group-containig compound (C), or the epoxy group-containing compound (C) and the impact modifier (B) is added thereto, and the mixture is melt-molded. According to such a method, the thermal stability in molten state can be remarkably improved.

Also, it is possible that the polyarylate, polyamide and the impact modifier (B) are pre-mixed, the mixture is suppled to a single-screw or multi-screw extruder, and the mixture is kneaded, or it is possible that the two components among from the polyarylate, the polyamide and the impact modifier are melt-kneaded, then the rest is added thereto and melt kneaded.

The composition of the present invention may contain, if necessary, a lubricant such as wax, metal soap, or ethylenebisstearyl amide a stabilizer such as a phosphite stabilizer and a phenol stabilizer, an ultraviolet absorber, a pigment, a flame retarder, a plasticizer, a glass fiber, a mineral filler, a filler such as talc, a reinforced fiber, and the like.

According to injection molding extrusion, blowing molding or compression molding, the molded article from the composition of the invention is excellent in high speed punching impact resistance, surface appearance, dimensional stability under humidity, weld line strength, and the like. The molded articles can be preferably used as various motor exterior parts, motor outside panel, machine parts, electric and electronic parts, and the like. Further, because the composition is excellent in thermal stability in molten state, macromoldings and recycle moldings which are excellent in dynamic properties can be obtained. Furthermore, even is the molding machine is stopped temporarily during molding, the physical properties of the molded article therefrom are not lowered too much.

When the composition of the present invention is used, there can be obtained the molded article excellent in impact resistance, particularly high speed punching impact strength, weld line strength, dimensional stability under humidity, surface appearance, rigidity, moldability, chemical resistance, and the like. Also, even if the composition stays in a cylinder for a long time, the melt viscosity is not very increased, and the physical properties of the molded article can

be kept excellent.

The present invention is more specifically described and explained by means of the following Examples, in which all % and parts are by weight otherwise noted.

Reference Example 1

[Preparation of polyarylate]

Various polyarylates shown in Table 1 were prepared from isophthaloyl dichloride, terephthaloyl dichloride and bisphenol A in interfacial polycondensation. During polycondensation, the molar ratio of the carboxyloyl dichloride to bisphenol A and the addition time were controlled to give each polyarylate having an acid chloride value and acid value shown in Table 1.

(Measurement of acid chloride value)

A sample (polyarylate) having an amount of about 0.1 g is weighed exactly and 10 mℓ of chloroform is added to the sample to dissolve. To the solution are added 2mℓ of methanol and a small amount of 0.2 % methanol solution of Thymol Blue as the indicator, and the mixture is stirred at room temperature for 60 minutes to react. The liberated hydrogen chloride is titrated with 0.1 N chloroform solution of tributyl amine as the end point at which the indicator changes from pink to yellow. Separately, the blank test is carried out without using the sample.

The acid chloride value is calculated by the following equation :

$$\text{Acid chloride value (equivalent/g)} = [(Ts-Tb) \times 0.1 \times F \times 10^{-3}] / W$$

wherein Ts is an amount of 0.1 N chloroform solution of tributyl amine consumed in titration (mℓ ), Tb is an amount of 0.1 N chloroform solution of tributyl amine consumed in blank test (mℓ ), F is a titrimetric factor of 0.1 N chloroform solution of tributyl amine and W is a weight of the sample (polyarylate) (g).

(Measurement of acid value)

A sample (polyarylate) having an amount of about 0.1 g is weighed exactly and is dissolved in 18 mℓ of chloroform. To the solution is added 2mℓ of methanol and the mixture is stirred at room temperature for 60 minutes. Then, the solution is titrated with 0.1 N benzyl alcohol solution of NaOH, using 0.1 % Phenol Red as the indicator, as the end point at which the indicator changes from yellow to red. Separately, the blank test is carried out without using the sample.

The acid value is calculated by the following equation :

$$\text{Acid value (equivalent/g)} = [(A-B) \times 0.1 \times F \times 10^{-3}] / W$$

wherein A is an amount of 0.1 N benzyl alcohol solution of NaOH consumed in titration (mℓ ), B is an amount of 0.1 N benzyl alcohol solution of NaOH consumed in blank test (mℓ ), F is a titrimetric factor of 0.1 N benzyl alcohol solution of NaOH and W is a weight of the sample (polyarylate) (g).

The results are shown in Table 1.

Table 1

| Polyarylate | Aromatic dicarboxylic acid component | | Intrinsic viscosity | Acid chloride value ($10^{-6}$ equivalent/g) | Acid value ($10^{-6}$ equivalent/g) |
|---|---|---|---|---|---|
| | Isophthalic acid (% by mole) | Terephthalic acid (% by mole) | | | |
| A-1 | 100 | 0 | 0.60 | 12 | 50 |
| A-2 | 80 | 20 | 0.58 | 12 | 62 |
| A-3 | 80 | 20 | 0.55 | 10 | 40 |
| A-4 | 80 | 20 | 0.56 | 6 | 35 |
| A-5 | 80 | 20 | 0.62 | 17 | 55 |
| A-6 | 100 | 0 | 0.56 | 0 | 13 |
| A-7 | 80 | 20 | 0.57 | 0 | 35 |
| A-8 | 80 | 20 | 0.60 | 0 | 60 |
| A-9 | 80 | 20 | 0.54 | 20 | 40 |

Examples 1 to 15 and Comparative Examples 1 to 8

Each of polyarylates (A-1 to A-9) shown in Table 1, a polyamide, poly-ε-caprolactam having a relative viscosity of 3.2, commercially available under the trademark "AMILAN CM 1026" from Toray Industries, Inc. and modified polyolefins (B-1 and B-2) as mentioned below were mixed in amounts shown in Table 2, and the mixture was dry-blended, then dried at 80°C for 15 hours in vacuo. The obtained mixture was melt-blended and extruded in a twin-screw extruder at 270°C to give pellets.

The obtained pellets were dried at 120°C for 15 hours in vacuo. A test piece was prepared from the pellets by means of injection molding.

[Modified polyolefin]

B-1: Ethylene-propylene copolymer onto which maleic anhydride is grafted (commercially available under the trademark "T7711SP" from Japan Synthetic Rubber Co., Ltd., a content of maleic anhydride : 0.8 %)
B-2: Ethylene-glycidyl methacrylate copolymer (commercially available under the trademark "Bondfast E" from Sumitomo Kagaku Kogyo Kabushiki Kaisha, a content of glycidyl methacrylate : 11.5 %)

As to the molded article, the high speed punching impact strength, weld strength, dimensional stability under humidity and surface appearance were estimated as follows :

(High speed punching impact strength)

A test piece (100 mm x 100 mm x 3 mm) is punched at a temperature of 23°C or a temperature of -30°C with a probe (5/8 inch in diameter) at a rate of 5 m/second by using a high speed punching impact tester commercially available under the trademark "HRIT8000" from Reometrics Inc. and the energy required to punch is measured.

(Weld strength)

A plate (100 mm x 100 mm x 3 mm) having a weld line in the center which is molded by means of two-point gate is used as a test piece.
Molding condition : An injection pressure of 5 $kg/cm^2$ (gage pressure) higher than the minimal limit injection pressure to fill completely. The top of the punch is set so as to strike the weld line, and the strength is measured in the same manner as in measurement of high speed punching impact strength.

(Dimensional stability under humidity)

A plate (100 mm x 100 mm x 3 mm) is dipped in water having a temperature of 23°C for 10 days. Then, the sizes (length and width) of the plate are measured. The elongation (%) of each size is calculated, and the stability is shown as the average of the two elongations.

(Surface appearance)

A plate (100 mm x 100 mm x 3 mm) is molded and the surface of the plate is observed with the naked eye. Whether the plate has defects such as flow marks and silver marks around the gate or not is estimated.

[ Estimation]

× : The plate has many defects.
Δ : The plate has a little defects.
○ : The plate has little defects.

The results are shown in Table 2.

Table 2

| Example No. | 1 | 2 | 3 | 4 | 5 | 6 | 7 | 8 | 9 | 10 | 11 | 12 |
|---|---|---|---|---|---|---|---|---|---|---|---|---|
| Composition (parts) | | | | | | | | | | | | |
| Polyarylate | | | | | | | | | | | | |
| A-1 | 50 | – | – | – | – | – | – | – | – | – | – | – |
| A-2 | – | 50 | – | – | – | – | 50 | 50 | 50 | 50 | 50 | 40 |
| A-3 | – | – | 50 | – | – | – | – | – | – | – | – | – |
| A-4 | – | – | – | 50 | – | – | – | – | – | – | – | – |
| A-5 | – | – | – | – | 50 | – | – | – | – | – | – | – |
| A-6 | – | – | – | – | – | – | – | – | – | – | – | – |
| A-7 | – | – | – | – | – | – | – | – | – | – | – | – |
| A-8 | – | – | – | – | – | – | – | – | – | – | – | – |
| A-9 | – | – | – | – | – | 50 | – | – | – | – | – | – |
| Polyamide (AMILAN CM1026) | 50 | 50 | 50 | 50 | 50 | 50 | 50 | 50 | 50 | 50 | 50 | 60 |
| Modified polyolefin | | | | | | | | | | | | |
| B-1 | 10 | 10 | 10 | 10 | 10 | 10 | 15 | 5 | 5 | 8 | – | 10 |
| B-2 | – | – | – | – | – | – | – | – | 5 | 2 | 10 | – |

– continued –

– continued –

| Example No. | 13 | 14 | 15 | Com. Ex. 1 | Com. Ex. 2 | Com. Ex. 3 | Com. Ex. 4 | Com. Ex. 5 | Com. Ex. 6 | Com. Ex. 7 | Com. Ex. 8 |
|---|---|---|---|---|---|---|---|---|---|---|---|
| Composition (parts) | | | | | | | | | | | |
| Polyarylate | | | | | | | | | | | |
| A-1 | – | – | – | – | – | – | – | – | – | – | – |
| A-2 | 30 | 60 | 40 | – | – | – | – | – | – | – | – |
| A-3 | – | – | – | – | – | – | – | – | – | – | – |
| A-4 | – | – | – | – | – | – | – | – | – | – | – |
| A-5 | – | – | – | – | – | – | – | – | – | – | – |
| A-6 | – | – | – | 50 | – | – | 50 | 40 | 60 | 50 | – |
| A-7 | – | – | – | – | 50 | – | – | – | – | – | – |
| A-8 | – | – | – | – | – | 50 | – | – | – | – | 50 |
| A-9 | – | – | – | – | – | – | – | – | – | – | – |
| Polyamide (AMILAN CM1026) | 70 | 40 | 60 | 50 | 50 | 50 | 50 | 60 | 40 | 50 | 50 |
| Modified polyolefin | | | | | | | | | | | |
| B-1 | 10 | 10 | 8 | 10 | 10 | 10 | – | 10 | 10 | 7 | 7 |
| B-2 | – | – | 2 | – | – | – | 10 | – | – | 3 | 3 |

– continued –

- continued -

| Example No. | 1 | 2 | 3 | 4 | 5 | 6 | 7 | 8 | 9 | 10 | 11 | 12 |
|---|---|---|---|---|---|---|---|---|---|---|---|---|
| High speed punching impact strength (J) | | | | | | | | | | | | |
| 23℃ | 73 | 80 | 76 | 70 | 80 | 67 | 73 | 81 | 71 | 73 | 64 | 82 |
| -30℃ | 59 | 68 | 63 | 64 | 70 | 56 | 67 | 55 | 60 | 63 | 52 | 72 |
| Weld strength (23℃, J) | 69 | 72 | 70 | 66 | 74 | 60 | 65 | 70 | 70 | 73 | 61 | 75 |
| Dimensional stability under humidity (%) | 0.19 | 0.20 | 1.18 | 0.21 | 0.19 | 0.18 | 0.18 | 0.22 | 0.23 | 0.22 | 0.25 | 0.31 |
| Surface appearance | ○ | ○ | ○ | ○ | ○ | ○ | ○ | ○ | ○ | ○ | ○ | ○ |

- continued -

- continued -

| Example No. | 13 | 14 | 15 | Com. Ex. 1 | Com. Ex. 2 | Com. Ex. 3 | Com. Ex. 4 | Com. Ex. 5 | Com. Ex. 6 | Com. Ex. 7 | Com. Ex. 8 |
|---|---|---|---|---|---|---|---|---|---|---|---|
| High speed punching Impact strength (J) | | | | | | | | | | | |
| 23℃ | 87 | 56 | 83 | 6 | 23 | 44 | 13 | 10 | 2 | 26 | 50 |
| −30℃ | 76 | 42 | 73 | 1 | 13 | 20 | 4 | 3 | 1 | 15 | 42 |
| Weld strength (23℃, J) | 73 | 53 | 83 | 1 | 4 | 25 | 6 | 2 | 1 | 21 | 33 |
| Dimensional stability under humidity (%) | 0.35 | 0.15 | 0.32 | 0.42 | 0.40 | 0.39 | 0.44 | 0.51 | 0.35 | 0.41 | 0.42 |
| Surface appearance | ○ | ○ | ○ | × | × | △ | × | × | × | × | △ |

Examples 16 to 29 and Comparative Examples 9 to 16

Each of the polyarylates (A-1 to A-8 obtained in Reference Example 1) shown in Table 1, the polyamide, AMILAN CM 1026, the modified polyolefins (B-1 and B-2) which were the same polyolefin as used in Examples 1-15 and an epoxy group-containing compound, phenyl glycidyl ether (C-1) were mixed in amounts shown in Table 3, and the mixture was dry-blended, then dried at 80°C for 15 hours in vacuo. The obtained mixture was melt blended and extruded in a twin-screw extruder at 270°C to give pellets.

The obtained pellets were dired at 120°C for 15 hours in vacuo. A test piece was prepared from the pellets by means of injeciton molding.

As to the molded article, the high speed punching impact strength, weld strength, dimensional stability under humidity and surface appearance were measured in the same manner as in Example 1.

The results are shown in Table 3.

Table 3

| Example No. | 16 | 17 | 18 | 19 | 20 | 21 | 22 | 23 | 24 | 25 | 26 | 27 |
|---|---|---|---|---|---|---|---|---|---|---|---|---|
| Composition (parts) | | | | | | | | | | | | |
| Polyarylate | | | | | | | | | | | | |
| A-1 | 50 | – | – | – | – | – | – | – | – | – | – | – |
| A-2 | – | 50 | – | – | – | 50 | 50 | 50 | 50 | 50 | 40 | 30 |
| A-3 | – | – | 50 | – | – | – | – | – | – | – | – | – |
| A-4 | – | – | – | 50 | – | – | – | – | – | – | – | – |
| A-5 | – | – | – | – | 50 | – | – | – | – | – | – | – |
| A-6 | – | – | – | – | – | – | – | – | – | – | – | – |
| A-7 | – | – | – | – | – | – | – | – | – | – | – | – |
| A-8 | – | – | – | – | – | – | – | – | – | – | – | – |
| Polyamide (AMILAN CM1026) | 50 | 50 | 50 | 50 | 50 | 50 | 50 | 50 | 50 | 50 | 60 | 70 |
| Modified polyolefin | | | | | | | | | | | | |
| B-1 | 10 | 10 | 10 | 10 | 10 | 15 | 5 | 5 | 8 | – | 10 | 10 |
| B-2 | – | – | – | – | – | – | – | 5 | 2 | 10 | – | – |
| Epoxy group-containing compound | | | | | | | | | | | | |
| C-1 (Phenyl glycidyl ether) | 1.0 | 1.0 | 1.0 | 1.0 | 1.0 | 1.0 | 1.0 | 1.0 | 1.0 | 1.0 | 1.0 | 1.0 |

– continued –

- continued -

| Example No. | 28 | 29 | Com. Ex. 9 | Com. Ex.10 | Com. Ex.11 | Com. Ex.12 | Com. Ex.13 | Com. Ex.14 | Com. Ex.15 | Com. Ex.16 |
|---|---|---|---|---|---|---|---|---|---|---|
| **Composition (parts)** | | | | | | | | | | |
| Polyarylate | | | | | | | | | | |
| A-1 | – | – | – | – | – | – | – | – | – | – |
| A-2 | 60 | 40 | – | – | – | – | – | – | – | – |
| A-3 | – | – | – | – | – | – | – | – | – | – |
| A-4 | – | – | – | – | – | – | – | – | – | – |
| A-5 | – | – | – | – | – | – | – | – | – | – |
| A-6 | – | – | 50 | – | – | 50 | 40 | 60 | 50 | – |
| A-7 | – | – | – | 50 | – | – | – | – | – | – |
| A-8 | – | – | – | – | 50 | – | – | – | – | 50 |
| Polyamide (AMILAN CM1026) | 40 | 60 | 50 | 50 | 50 | 50 | 60 | 40 | 50 | 50 |
| Modified polyolefin | | | | | | | | | | |
| B-1 | 10 | 8 | 10 | 10 | 10 | – | 10 | 10 | 7 | 7 |
| B-2 | – | 2 | – | – | – | 10 | – | – | 3 | 3 |
| Epoxy group-containing compound | | | | | | | | | | |
| C-1 (Phenyl glycidyl ether) | 1.0 | 1.0 | 1.0 | 1.0 | 1.0 | 1.0 | 1.0 | 1.0 | 1.0 | 1.0 |

- continued -

- continued -

| Example No. | 16 | 17 | 18 | 19 | 20 | 21 | 22 | 23 | 24 | 25 | 26 | 27 |
|---|---|---|---|---|---|---|---|---|---|---|---|---|
| High speed punching impact strength (J) | | | | | | | | | | | | |
| 23℃ | 75 | 82 | 78 | 72 | 81 | 75 | 83 | 73 | 75 | 66 | 84 | 89 |
| -30℃ | 65 | 71 | 66 | 67 | 73 | 70 | 58 | 61 | 66 | 55 | 75 | 78 |
| Weld strength (23℃, J) | 72 | 75 | 73 | 69 | 77 | 70 | 72 | 72 | 75 | 63 | 77 | 75 |
| Dimensional stability under humidity (%) | 0.18 | 0.19 | 1.17 | 0.20 | 0.18 | 0.17 | 0.21 | 0.22 | 0.21 | 0.24 | 0.30 | 0.34 |
| Surface appearance | ○ | ○ | ○ | ○ | ○ | ○ | ○ | ○ | ○ | ○ | ○ | ○ |

- continued -

- continued -

| Example No. | 28 | 29 | Com. Ex. 9 | Com. Ex. 10 | Com. Ex. 11 | Com. Ex. 12 | Com. Ex. 13 | Com. Ex. 14 | Com. Ex. 15 | Com. Ex. 16 |
|---|---|---|---|---|---|---|---|---|---|---|
| High speed punching impact strength (J) | | | | | | | | | | |
| 23℃ | 58 | 85 | 7 | 25 | 46 | 15 | 12 | 3 | 28 | 52 |
| -30℃ | 45 | 76 | 1 | 15 | 23 | 5 | 4 | 1 | 18 | 45 |
| Weld strength (23℃, J) | 55 | 85 | 2 | 5 | 27 | 7 | 3 | 1 | 23 | 35 |
| Dimensional stability under humidity (%) | 0.15 | 0.31 | 0.41 | 0.39 | 0.38 | 0.43 | 0.50 | 0.34 | 0.40 | 0.41 |
| Surface appearance | ○ | ○ | × | × | △ | × | × | × | × | △ |

Examples 30 to 40 and Comparative Examples 17 to 24

The polyarylate (A-2 obtained in Reference Example 1), The polyamide, AMILAN CM1026, modified polyolefins (B-1 to B-6) as mentioned below and epoxy group-contaiing compounds (C-1 to C-4) as mentioned below were mixed in amounts shown in Table 4, and the mixture was dry-blended, then dried at 80°C for 15 hours in vacuo. The obtained mixture was melt blended and extruded in a twin-screw extruder at 270°C to give pellets.

The obtained pellets were dried at 120°C for 15 hours in vacuo. The pellets were subjected to injection molding at a resin temperature of 290°C.

[ Modified polyolefin]

B-3: Ethylene-ethyl acrylate-glycidyl methacrylate polymer (commercially available under the trademark "Rexpearl RA 4050 A2" from Nippon Sekiyu Kagaku Kabushiki Kaisha, A content of glycidyl methacrylate : 5 %)

B-4: Ethylene-glycidyl methacrylate copolymer onto which methyl methacrylate polymer is grafted (commercially available under the trademark "Modiper A 4200" from Nippon Yushi Kabushiki Kaisha, A content of glycidyl methacrylate : 10.5 %)

B-5: Ethylene-glycidyl methacrylate copolymer onto which acrylonitrile-styrene copolymer is grafted (commercially available under the trademark "Modiper A 4400" from Nippon Yushi Kabushiki Kaisha, A content of glycidyl methacrylate: 10.5 %)

B-6: Methyl methacrylate-glycidyl methacrylate copolymer (commercially available under the trademark "Blenmer CP-50M" from Nippon Yushi Kabushiki Kaisha, A content of glycidyl methacrylate: 50 %)

B-1 and B-2 were the same as used in Examples 1-15.

[Epoxy group-containing compound]

C-1: Phenyl glycidyl ether

C-2: 2-Ethylhexyl glycidyl ether (commercially available under the trademark "DENACOL EX-121" from Nagase Kasei Kabushiki Kaisha)

C-3: Bisphenol A epoxy resin (commercially available under the trademark "Epikote 1002" from Yuka Shell Epoxy Kabushiki Kaisha)

C-4 : 3,4-Epoxycyclohexylmethyl-3,4-epoxycyclohexane carboxylate (commercially available under the trademark "ERL 4221" from Union Carbide Japan Kabushiki Kaisha

As to the obtained test piece, an elongation at tensile break was measured at 23°C according to American Society for Testing Materials (ASTM) D 638, and Izod impact strength with V-notch was measured at 23°C according to ASTM D256.

Separetely, after the pellets stayed in an injection molding machine at 290°C for 20 minutes, the injection molding was conducted in the same manner as above. As to the molded article, the elongation at tensile break and Izod impact strength were measured in the same manner as above.

Also, the pellets were melted at 290°C and the viscosity was measured by using a capillary rheometer immediately after the melting of pellets is completed and after 20 minutes from the completion of the melting (shear speed : 1216 $S^{-1}$).

The results are shown in Table 4.

Table 4

| Example No. | 30 | 31 | 32 | 33 | 34 | 35 | 36 | 37 | 38 | 39 | 40 |
|---|---|---|---|---|---|---|---|---|---|---|---|
| Composition (parts) | | | | | | | | | | | |
| Polyarylate | | | | | | | | | | | |
| A-2 | 50 | 50 | 50 | 50 | 50 | 50 | 50 | 45 | 50 | 50 | 50 |
| Polyamide (AMILAN CM1026) | 50 | 50 | 50 | 50 | 50 | 50 | 50 | 45 | 50 | 50 | 50 |
| Modified polyolefin | | | | | | | | | | | |
| B-1 | 10 | 10 | 10 | 10 | 8 | 8 | 8 | 8 | 8 | 10 | 6 |
| B-2 | – | – | – | – | 2 | – | – | – | – | – | – |
| B-3 | – | – | – | – | – | 2 | – | – | – | 1 | 4 |
| B-4 | – | – | – | – | – | – | 2 | – | – | – | – |
| B-5 | – | – | – | – | – | – | – | 2 | – | – | – |
| B-6 | – | – | – | – | – | – | – | – | 2 | – | – |
| Epoxy group-containing compound | | | | | | | | | | | |
| C-1 | 1.0 | – | – | – | 1.0 | 1.0 | 1.0 | 1.0 | 1.0 | 1.0 | 1.0 |
| C-2 | – | 1.0 | – | – | – | – | – | – | – | – | – |
| C-3 | – | – | 1.0 | – | – | – | – | – | – | – | – |
| C-4 | – | – | – | 1.0 | – | – | – | – | – | – | – |

- continued -

- continued -

| Example No. | Com. Ex.17 | Com. Ex.18 | Com. Ex.19 | Com. Ex.20 | Com. Ex.21 | Com. Ex.22 | Com. Ex.23 | Com. Ex.24 |
|---|---|---|---|---|---|---|---|---|
| Composition (parts) | | | | | | | | |
| Polyarylate | | | | | | | | |
| A-2 | 50 | 50 | 50 | 50 | 50 | 50 | 50 | 50 |
| Polyamide (AMILAN CM1026) | 50 | 50 | 50 | 50 | 50 | 50 | 50 | 50 |
| Modified polyolefins | | | | | | | | |
| B-1 | 10 | 8 | 8 | 8 | - | - | - | - |
| B-2 | - | 2 | - | - | - | - | - | - |
| B-3 | - | - | 2 | - | - | - | - | - |
| B-4 | - | - | - | 2 | - | - | - | - |
| B-5 | - | - | - | - | - | - | - | - |
| B-6 | - | - | - | - | - | - | - | - |
| Epoxy group-containing compound | | | | | | | | |
| C-1 | - | - | - | - | 1.0 | - | - | - |
| C-2 | - | - | - | - | - | 1.0 | - | - |
| C-3 | - | - | - | - | - | - | 1.0 | - |
| C-4 | - | - | - | - | - | - | - | 1.0 |

- continued -

- continued -

| Example No. | 30 | 31 | 32 | 33 | 34 | 35 | 36 | 37 | 38 | 39 | 40 |
|---|---|---|---|---|---|---|---|---|---|---|---|
| Elongation at tensile break (%) | | | | | | | | | | | |
| Without staying | 89 | 83 | 79 | 75 | 90 | 92 | 91 | 95 | 71 | 92 | 85 |
| After staying | 56 | 53 | 58 | 50 | 68 | 70 | 72 | 75 | 55 | 66 | 69 |
| Izod impact strength (kgcm/cm) | | | | | | | | | | | |
| Without staying | 62 | 60 | 63 | 61 | 56 | 58 | 57 | 62 | 57 | 60 | 55 |
| After staying | 33 | 31 | 30 | 30 | 41 | 45 | 44 | 48 | 40 | 44 | 46 |
| Melting viscosity (P) | | | | | | | | | | | |
| Immediately after melting | 4400 | 4200 | 4500 | 4200 | 4600 | 4700 | 4300 | 4100 | 4400 | 4300 | 4800 |
| After staying | 3600 | 3500 | 3700 | 3500 | 4100 | 4200 | 3900 | 4000 | 4000 | 3800 | 4600 |

- continued -

- continued -

| Example No. | Com. Ex. 17 | Com. Ex. 18 | Com. Ex. 19 | Com. Ex. 20 | Com. Ex. 21 | Com. Ex. 22 | Com. Ex. 23 | Com. Ex. 24 |
|---|---|---|---|---|---|---|---|---|
| Elongation at tensile break (%) | | | | | | | | |
| Without staying | 90 | 88 | 82 | 89 | 58 | 57 | 68 | 65 |
| After staying | 25 | 26 | 28 | 22 | 27 | 24 | 32 | 33 |
| Izod impact strength (kgcm/cm) | | | | | | | | |
| Without staying | 62 | 53 | 55 | 57 | 10 | 11 | 13 | 10 |
| After staying | 17 | 16 | 17 | 19 | 5 | 6 | 7 | 4 |
| Melting viscosity (P) | | | | | | | | |
| Immediately after melting | 4100 | 4500 | 4400 | 4600 | 4000 | 4100 | 4000 | 4300 |
| After staying | 1900 | 2500 | 2600 | 2600 | 2800 | 2900 | 2800 | 3000 |

Reference Example 2

A 6ℓ flask was charged with 431.1 g (1.485 moles) of 1,1-bis(4-hydroxyphenyl)phenyl ethane, 339.0 g (1.485 moles) of 2,2-bis(4-hydroxyphenyl)propane and 9.0 g (0.06 mole) of p-t-butylphenol (the three component being phenol component), 5.28 g of sodium hydrosulfide, 1920 mℓ of 4 N sodium hydroxide and 3320 mℓ of deionized water, and the mixture was stirred in an atmosphere of nitrogen, then was cooled to 5°C to prepare an alkaline aqueous solution containing the phenol component.

Separately, a 6ℓ flask was charged with 618.2 g (3.045 moles) of isophthaloyl chloride (acid component) and 5000 mℓ of methylene chloride, isophthaloyl chloride was dissolved, and the mixtute was cooled to 5°C.

A 15ℓ separable flask was charged with 2000 mℓ of deionized water and 0.94 g (0.003 mole) of benzyltributyl ammonium chloride as a catalyst in an atmosphere of nitrogen, and the mixture was cooled to 5°C. The solution containing the phenol component and the solution containing the acid component were continuously and simultaneously to the solution containing the catalyst by using a pump over 15 minutes, while violently stirring the solution containing the catalyst.

After completing the addition, the mixture was stirred for 60 minutes, then the stirring was stopped to separate into a methylene chloride layer and a aqueous layer. After decanting the aqueous layer, 5000mℓ of water was added and it was neutralized with a small amount of hydrochloric acid with stirring. After repeating the desalting by washing with water, 5000 mℓ of acetone was gradually added to the methylene chloride layer to precipitate a polymer. After the precipitate was filtered off, it was washed with 5000mℓ of acetone, then 5000mℓ of water to give a polymer (A-10) powder. The polymer powder was dried at 80°C for 10 hours, then at 140°C for 10 hours.

The obtained polymer (A-10) had an acid chloride value of 30 x $10^{-6}$ equivalent/g, an intrinsic viscosity of 0.6 and Tg of 198°C.

Reference Example 3

The procedure of Reference Example 2 was repeated except that 674.6 g (2.955 moles) of 2,2-bis(4-hydroxyphenyl) propane and 9.0 g (0.06 mole) of p-t-butylphenol were used as the phenol component, and 370.1 g (1.823 moles) of terephthaloyl chloride and 246.7 g (1.215 moles) of isophthaloyl chloride were used as the acid component to give a polymer (A-11).

The obtained polymer (A-11) had an acid chloride value of 20 x $10^{-6}$ equivalent/g, an intrinsic viscosity of 0.56 and Tg of 194°C.

Reference Example 4

The procedure of Reference Example 2 was repeated except that 646.8 g (2.2275 moles) of 1,1-bis (4-hydroxyphenyl)phenyl ethane, 169.5 g (0.7425 mole) of 2,2-bis(4-hydroxyphenyl)propane and 9.0 g (0.06 mole) of p-t-butylphenol were used as the phenol component, and 615.2 g (3.03 moles) of isophthaloyl chloride was used as the acid component to give a polymer (A-12).

The obtained polymer (A-12) had an acid chloride volume of 15 x $10^{-6}$ equivalent/g, an intrinsic viscosity of 0.55 and Tg of 208°C.

Reference Example 5

The procedure of Reference Example 2 was repeated except that 671.2 g (2.94 moles) of 2,2-bis(4-hydroxyphenyl) propane and 18.0 g (0.12 mole) of p-t-butylphenol were used as the phenol component, and 548.2 g (2.7 moles) of isophthaloyl chloride and 60.9 g (0.3 mole) of terephthaloyl chloride were used as the acid component to give a polymer (A-13).

The obtained polymer (A-13) had an acid chloride value of 0, an intrinsic viscosity of 0.62 and Tg of 179°C.

Examples 41 to 50 and Comparative Examples 25 to 28

Each of the polyarylates (A-10 to A-13 obtained in Reference Examples 2 to 5), a polyamide, namely, nylon 66 having a viscosity average molecular weight of 25000 and an amine value of 39, and an impact modifier (B-1, B-2, B-7 and B-8) as shown below were pre- mixed in amounts shown in Table 5, and the mixture was dried at 80°C for 10 hours in vacuo. The mixture was meltkneaded at 275°C by using a twin-screw extruder to give pellets.

[ Impact modifier]

B-1: T-7711SP
B-2: Bondfast E
B-7: Ethylene-ethyl acrylate-maleic anhydride polymer (commercially available under the trademark "Bondine AX-8390" from Sumitomo Kagaku Kogyo Kabushiki Kaisha)
B-8: An emulsion polymerization product of a mixture of 70 % of polybutadiene (average particle size: 0.25μ m, gel content:83 %), 6 % of acrylonitrile, 21 % of styrene and 3 % of glycidyl methacrylate

As to the obtained pellets, Izod impact strength, falling ball impact strength, tensile strength, heat distortion temperature, spiral flow value, surface appearance, gasoline resistance and zinc chloride resistance were measured as follows :

[Izod impact strength (kg cm/cm)]

According to ASTM D-256 (at 23°C, with 1/8 inch-noch).

[Falling ball impact strength (kg m)]

Test piece: A plate (150 mm x 150 mm x 3 mm)
Measurement temperature: 30°C
A ball (1 kg) is dropped to the plate and the hight at which the plate is breaken is measured.

Falling ball impact strength (kg · m)

= (Height at which a half of the plates (30 plates) were broken) x (Weight of ball)

[Tensile strength ($kg/cm^2$)]

According to ASTM D-638 (at 23°C )

[Heat distortion temperature (°C )]

According to ASTM D-648 (4.6 $kg/cm^2$ · load)

[Spiral flow value (mm)]

A flow length is measured by using a whirled mold (gate : 3 mm x 3 mm, width : 4 mm, thickness : 3 mm) in a 3.5 ounces injection molding machine at a cylinder temperature of 280°C and a mold temperature of 80°C under an injection pressure (gage pressure) of 120 $kg/cm^2$.

[Appearance of molded article]

Appearance of a molded article (box having a weight of about 700 g which is molded by using a 35 ounces injection molding machine at a cylinder temperature of 280°C ) is observed with the naked eye. (Estimation)

○ : The box has no burning, flow marks or ununiformity on the surface.
Δ : The box has burning, flow marks or ununiformity on the surface.
X : The box has remarkable burning, many flow marks and remarkable ununiformity on the surface.

[Gasoline resistance]

A 1/8 inch strip test piece is held under 3 % of flexual strain and is dipped in gasoline at 23°C for 7 days. The test piece is observed with the naked eye. (Estimation)

○ : There are no change and crack on the surface.
Δ : There are change or crack on the surface.
X : The surface is remarkably changed or the test piece is broken.

[Zinc chloride resistance]

The procedure in gasoline resistance test is repeated except that a saturated aqueous solution of zinc chloride is used instead of gasoline.

The estimation is the same as in gasoline resistance.

Table 5

| Example No. | 41 | 42 | 43 | 44 | 45 | 46 | 47 | 48 | 49 | 50 |
|---|---|---|---|---|---|---|---|---|---|---|
| Composition (%) | | | | | | | | | | |
| Polyarylate | | | | | | | | | | |
| A-10 | 30 | 30 | 35 | 45 | – | – | 40 | 30 | 30 | – |
| A-11 | – | – | – | – | 40 | – | – | – | – | 35 |
| A-12 | – | – | – | – | – | 30 | – | – | – | – |
| A-13 | – | – | – | – | – | – | – | – | – | – |
| Polyamide (Nylon 66) | 60 | 55 | 55 | 45 | 50 | 60 | 50 | 60 | 65 | 65 |
| Impact modifier | | | | | | | | | | |
| B-1 | 10 | 15 | 10 | 10 | 10 | 10 | – | – | 5 | – |
| B-2 | – | – | – | – | – | – | – | 3 | – | – |
| B-7 | – | – | – | – | – | – | – | 7 | – | – |
| B-8 | – | – | – | – | – | – | 10 | – | – | – |
| Izod impact strength (kgcm/cm) | 48 | 63 | 41 | 40 | 45 | 47 | 42 | 47 | 31 | 15 |
| Falling ball impact strength (kgm) | 4.9 | 5.4 | 4.3 | 4.1 | 4.6 | 4.8 | 4.3 | 4.7 | 3.6 | 2.5 |
| Tensile strength ($kg/cm^2$) | 611 | 539 | 609 | 605 | 610 | 621 | 609 | 610 | 703 | 721 |
| Heat distortion temperature (℃) | 190 | 186 | 189 | 189 | 187 | 196 | 187 | 188 | 195 | 196 |
| Spiral flow value (mm) | 573 | 531 | 565 | 552 | 578 | 565 | 566 | 525 | 624 | 683 |
| Appearance of molded article | ○ | ○ | ○ | ○ | ○ | ○ | ○ | ○ | ○ | ○ |
| Gasoline resistance | ○ | ○ | ○ | ○ | ○ | ○ | ○ | ○ | ○ | ○ |
| Zinc chloride resistance | ○ | ○ | ○ | ○ | ○ | ○ | ○ | ○ | ○ | ○ |

– continued –

– continued –

| Example No. | Com. Ex.25 | Com. Ex.26 | Com. Ex.27 | Com. Ex.28 |
|---|---|---|---|---|
| Composition (%) | | | | |
| Polyarylate | | | | |
| A-10 | – | 90 | 10 | – |
| A-11 | – | – | – | – |
| A-12 | – | – | – | – |
| A-13 | 30 | – | – | 30 |
| Polyamide (Nylon 66) | 60 | 10 | 90 | 25 |
| Impact modifier | | | | |
| B-1 | 10 | – | – | 45 |
| B-2 | – | – | – | – |
| B-7 | – | – | – | – |
| B-8 | – | – | – | – |
| Izod impact strength (kgcm/cm) | 12 | 4 | 3 | 6 |
| Falling ball impact strength (kgm) | 0.4 | 0.1 | 0.9 | 0.4 |
| Tensile strength ($kg/cm^2$) | 503 | 711 | 715 | 414 |
| Heat distortion temperature (℃) | 173 | 189 | 190 | 135 |
| Spiral flow value (mm) | 575 | 315 | 690 | 365 |
| Appearance of molded article | × | × | ○ | × |
| Gasoline resistance | ○ | × | ○ | × |
| Zinc chloride resistance | × | ○ | × | ○ |

In Addition to the ingredients used in the Examples, other ingredients can be used in the Examples as set for them

in the specification to obtain substantially the same results.

## Claims

1. A thermoplastic resin composition comprising:

   (A) 100 parts by weight of a resin composition of 20 to 80 % by weight of a polyarylate having an acid chloride value of 2 x $10^{-6}$ to 50 x $10^{-6}$ equivalent/g and 80 to 20 % by weight of a polyamide, and
   (B) 1 to 40 parts by weight of an impact modifier.

2. The composition of Claim 1, wherein said impact modifier (B) is a modified polyolefin.

3. The composition of Claim 1, wherein said impact modifier (B) is a core shell graft polymer.

4. The composition of Claim 1, which further comprises (C) 0.1 to 10 parts by weight, based on 100 parts by weight of said resin composition (A), of an epoxy group-containing, low molecular weight compound having a number average molecular weight of not more than 2000, which is different from said impact modifier (B).

5. The composition of Claim 1, wherein said polyarylate has a glass transition temperature of not lower than 190°C.

6. The composition of Claim 1, wherein said polyarylate has said acid chloride group at polymer end.

7. The composition of Claim 1, wherein said polyarylate has an acid chloride value of 5 x $10^{-6}$ to 30 x $10^{-6}$ equivalent/g.

8. The composition of Claim 1, wherein said polyarylate has an acid chloride value of 5 x $10^{-6}$ to 20 x $10^{-6}$ equivalent/g.

9. The composition of Claim 1, wherein said polyarylate has an acid chloride value of 2 x $10^{-6}$ to 50 x $10^{-6}$ equivalent/g and an acid value of 30 x $10^{-6}$ to 100 x $10^{-6}$ equivalent/g.

10. The composition of Claim 1, wherein said polyarylate is an aromatic polyester comprising 2, 2-bis(4-hydroxyphenyl) propane, and terephthalic acid and/or isophthalic acid.

11. The composition of Claim 2, wherein said modified polyolefin is an acid anhydride group-containing olefin polymer.

12. The composition of Claim 2, wherein said modified polyolefin is an epoxy group-containing olefin polymer.

13. The composition of Claim 2, wherein said modified polyolefin is a mixture of an acid anhydride group-containing olefin polymer and an epoxy group-containig olefin polymer.

14. The composition of Claim 13, wherein said modified polyolefin is a mixture of 0.8 to 30 parts by weight of said acid anhydride group-containing olefin copolymer and 0.2 to 10 parts by weight of said epoxy group-containing olefin copolymer.

15. The composition of Claim 14, wherein said modified polyolefin is a mixture of 5 to 15 parts by weight of said acid anhydride group-containing olefin polymer and 0.2 to 3 parts by weight of said epoxy group-containing olefin polymer.

16. The composition of Claim 13, wherein said epoxy group-containing olefin polymer is a polymer prepared from ethylene, an alkyl acrylate and glycidyl methacrylate.

17. The composition of Claim 13, wherein said epoxy group-containing olefin polymer is an ethylene-glycidyl methacrylate polymer having a grafted chain comprising a vinyl polymer which has a number average molecular weight of 10 to 10000.

18. The composition of Claim 17, wherein said grafted chain is a polymer prepared from at least one monomer selected from the group consisting of styrene, acrylonitrile, methyl methacrylate and butyl acrylate.

19. The composition of Claim 13, wherein said epoxy group-containing olefin polymer is a polymer prepared from glycidyl methacrylate and at least one monomer selected from the group consisting of styrene, methyl methacrylate, ethyl acrylate, butyl acrylate, acrylonitrile and vinyl acetate.

20. The composition of Claim 4, wherein said epoxy group-containing compound (C) is a glycidyl ether of a phenol compound.

21. The composition of Claim 4, wherein said epoxy group-containing compound (C) is a phenyl glycidyl ether.

22. The composition of Claim 4, wherein said epoxy group-containing compound (C) is a glycidyl ether of alcohol compound.

23. The composition of Claim 4, wherein said epoxy group-containing compound (C) is a bisphenol A-epoxy resin having an epoxy equivalent of 150 to 1000 g/equivalent.

24. The composition of Claim 4, wherein said epoxy group-containing compound is an alicyclic epoxy resin.

25. The composition of Claim 4, wherein said epoxy group-containing compound is a glycidyl ether of aliphatic carboxylic acid.

26. The composition of Claim 1, wherein said polyarylate has an intrinsic viscosity (in chloroform solution, at 30°C ) of from 0.2 to 1.5.

27. The composition of Claim 1, wherein said polyarylate has an intrinsic viscosity of from 0.4 to 0.8.

28. The composition of Claim 5, which is a composition comprising 25 to 70 % by weight of said polyarylate, 70 to 25 % by weight of said polyamide and 3 to 30 % by weight of said impact modifier.

29. The composition of Claim 5, wherein said polyarylate is a polyarylate comprising units of 1,1-bis(4-hydroxyphenyl) phenyl ethane and/or 2,2-bis(4-hydroxyphenyl)propane and units of isophthalic acid and/or terephthalic acid.

30. The composition of Claim 1, wherein said polyamide is nylon 6.

31. The composition of Claim 1, wherein said polyamide is nylon 66.

32. The composition of Claim 5, wherein said polyamide is nylon 46.

33. The composition of Claim 3, wherein said core shell graft copolymer is an epoxy group-containig copolymer.

**Patentansprüche**

1. Eine thermoplastische Harzzusammensetzung, umfassend:

(A) 100 Gew.-Teile einer Harzzusammensetzung aus 20 bis 80 Gew.-% eines Polyarylats mit einem Säurechloridwert von $2 \times 10^{-6}$ bis $50 \times 10^{-6}$ Äquivalenten/g und 80 bis 20 Gew.-% eines Polyamids, und
(B) 1 bis 40 Gew.-Teile eines schlagzähigkeitsverleihenden Zusatzstoffes.

2. Die Zusammensetzung aus Anspruch 1, wobei der schlagzähigkeitsverleihende Zusatzstoff (B) ein modifiziertes Polyolefin ist.

3. Die Zusammensetzung aus Anspruch 1, wobei der schlagzähigkeitsverleihende Zusatzstoff (B) ein Kern-Hülle-Pfropfpolymer ist.

4. Die Zusammensetzung aus Anspruch 1, die darüber hinaus umfaßt (C) 0,1 bis 10 Gew.-Teile, bezogen auf 100 Gew.-Teile der Harzzusammensetzung (A), einer Epoxygruppen enthaltenden niedermolekulargewichtigen Verbindung mit einem zahlenmittleren Molekulargewicht von nicht mehr als 2000, die verschieden ist vom schlagzähigkeitsverleihenden Zusatzstoff (B).

**5.** Die Zusammensetzung aus Anspruch 1, wobei das Polyarylat eine Glasübergangstemperatur von nicht weniger als 190°C aufweist.

**6.** Die Zusammensetzung aus Anspruch 1, wobei das Polyarylat die Säurechloridgruppe am Polymerende aufweist.

**7.** Die Zusammensetzung aus Anspruch 1, wobei das Polyarylat einen Säurechloridwert von 5 x $10^{-6}$ bis 30 x $10^{-6}$ Äquivalenten/g aufweist.

**8.** Die Zusammensetzung aus Anspruch 1, wobei das Polyarylat einen Säurechloridwert von 5 x $10^{-6}$ bis 20 x $10^{-6}$ Äquivalenten/g aufweist.

**9.** Die Zusammensetzung aus Anspruch 1, wobei das Polyarylat einen Säurechloridwert von 2 x $10^{-6}$ bis 50 x $10^{-6}$ Äquivalenten/g und einen Säurewert von 30 x $10^{-6}$ bis 100 x $10^{-6}$ Äquivalenten/g aufweist.

**10.** Die Zusammensetzung aus Anspruch 1, wobei das Polyarylat ein aromatischer Polyester ist, umfassend 2,2-Bis (4-hydroxyphenyl)propan und Terephthalsäure und/oder Isophthalsäure.

**11.** Die Zusammensetzung aus Anspruch 2, wobei das modifizierte Polyolefin ein Säureanhydridgruppen enthaltendes Olefinpolymer ist.

**12.** Die Zusammensetzung aus Anspruch 2, wobei das modifizierte Polyolefin ein Epoxygruppen enthaltendes Olefinpolymer ist.

**13.** Die Zusammensetzung aus Anspruch 2, wobei das modifizierte Polyolefin eine Mischung aus einem Säureanhydridgruppen enthaltenden Olefinpolymer und einem Epoxygruppen enthaltenden Olefinpolymer ist.

**14.** Die Zusammensetzung aus Anspruch 13, wobei das modifizierte Polyolefin eine Mischung aus 0,8 bis 30 Gew.-Teilen des Säureanhydridgruppen enthaltenden Olefincopolymeren und 0,2 bis 10 Gew.-Teile des Epoxygruppen enthaltenden Olefincopolymeren ist.

**15.** Die Zusammensetzung aus Anspruch 14, wobei das modifizierte Polyolefin eine Mischung aus 5 bis 15 Gew.-Teilen des Säureanhydridgruppen enthaltenden Olefinpolymeren und 0,2 bis 3 Gew.-Teilen des Epoxygruppen enthaltenden Olefinpolymeren ist.

**16.** Die Zusammenseztung aus Anspruch 13, wobei das Epoxygruppen enthaltende Olefinpolymer ein aus Ethylen, einem Alkylacrylat und Glycidylmethacrylat hergestelltes Polymer ist.

**17.** Die Zusammensetzung aus Anspruch 13, wobei das Epoxygruppen enthaltende Olefinpolymer ein Ethylen-Glycidylmethacrylat-Polymer ist, das eine gepfropfte Kette aufweist, die ein Vinylpolymer mit einem zahlenmittleren Molekulargewicht von 10 bis 10000 umfaßt.

**18.** Die Zusammensetzung aus Anspruch 17, wobei die gepfropfte Kette ein Polymer ist, hergestellt aus mindestens einem aus der aus Styrol, Acrylnitril, Methylmethacrylat und Butylacrylat bestehenden Gruppe ausgewählten Monomer.

**19.** Die Zusammensetzung aus Anspruch 13, wobei das Epoxygruppen enthaltende Olefinpolymer ein Polymer ist, hergestellt aus Glycidylmethacrylat und mindestens einem aus der aus Styrol, Methylmethacrylat, Ethylacrylat, Butylacrylat, Acrylnitril und Vinylacetat bestehenden Gruppe ausgewählten Monomer.

**20.** Die Zusammensetzung aus Anspruch 4, wobei die Epoxygruppen enthaltende Verbindung (C) ein Glycidylether einer Phenolverbindung ist.

**21.** Die Zusammensetzung aus Anspruch 4, wobei die Epoxygruppen enthaltende Verbindung (C) ein Phenylglycidylether ist.

**22.** Die Zusammensetzung aus Anspruch 4, wobei die Epoxygruppen enthaltende Verbindung (C) ein Glycidylether einer Alkoholverbindung ist.

**23.** Die Zusammensetzung aus Anspruch 4, wobei die Epoxygruppen enthaltende Verbindung (C) ein Bisphenol A-Epoxyharz mit einem Epoxyequivalent von 150 bis 1000 g/Äquivalent ist.

**24.** Die Zusammensetzung aus Anspruch 4, wobei die Epoxygruppen enthaltende Verbindung ein alicyclisches Epoxyharz ist.

**25.** Die Zusammensetzung aus Anspruch 4, wobei die Epoxygruppen enthaltende Verbindung ein Glycidylether einer aliphatischen Carbonsäure ist.

**26.** Die Zusammensetzung aus Anspruch 1, wobei das Polyarylat eine intrinsische Viskosität (in Chloroformlösung bei 30°C) von 0,2 bis 1,5 aufweist.

**27.** Die Zusammensetzung aus Anspruch 1, wobei das Polyarylat eine intrinsische Viskosität von 0,4 bis 0,8 aufweist.

**28.** Die Zusammensetzung aus Anspruch 5, die eine Zusammensetzung ist, umfassend 25 bis 70 Gew.-% des Polyarylats, 70 bis 25 Gew.-% des Polyamids und 3 bis 30 Gew.-% des schlagzähigkeitsverleihenden Zusatzstoffes.

**29.** Die Zusammensetzung aus Anspruch 5, wobei das Polyarylat ein Polyarylat ist, umfassend Einheiten aus 1,1-Bis(4-hydroxyphenyl)phenylethan und/oder 2,2-Bis(4-hydroxyphenyl)propan und Einheiten aus Isophthalsäure und/oder Terephthalsäure.

**30.** Die Zusammensetzung aus Anspruch 1, wobei das Polyamid Nylon 6 ist.

**31.** Die Zusammensetzung aus Anspruch 1, wobei das Polyamid Nylon 66 ist.

**32.** Die Zusammensetzung aus Anspruch 5, wobei das Polyamid Nylon 46 ist.

**33.** Die Zusammensetzung aus Anspruch 3, wobei das Kern-Hülle-Pfropfcopolymer ein Epoxygruppen enthaltendes Copolymer ist.

**Revendications**

**1.** Composition de résine thermoplastique comprenant :

(A) 100 parties en poids d'une composition de résine constituée de 20 à 80% en poids d'un polyarylate ayant une valeur de chlorure d'acide de $2 \times 10^{-6}$ à $50 \times 10^{-6}$ équivalent/g et de 80 à 20% en poids d'un polyamide, et
(B) 1 à 40 parties en poids d'un modificateur d'impact.

**2.** Composition de la revendication 1, dans laquelle ledit modificateur d'impact (B) est une polyoléfine modifiée.

**3.** Composition de la revendication 1, dans laquelle ledit modificateur d'impact (B) est un polymère par greffage d'enveloppe de noyau.

**4.** Composition de la revendication 1, qui comprend en outre (C) 0,1 à 10 parties en poids, par rapport à 100 parties en poids de ladite composition de résine (A), d'un composé contenant des groupes époxy, de faible poids moléculaire, ayant un poids moléculaire moyen en nombre inférieur à 2000, qui est différent dudit modificateur d'impact (B).

**5.** Composition de la revendication 1, dans laquelle ledit polyarylate a une température de transition vitreuse supérieure à 190°C.

**6.** Composition de la revendication 1, dans laquelle ledit polyarylate porte les groupes chlorure d'acide à l'extrémité du polymère.

**7.** Composition de la revendication 1, dans laquelle ledit polyarylate a une valeur de chlorure d'acide de $5 \times 10^{-6}$ à $30 \times 10^{-6}$ équivalent/g.

**8.** Composition de la revendication 1, dans laquelle ledit polyarylate a une valeur de chlorure d'acide de 5 x $10^{-6}$ à 20 x $10^{-6}$ équivalent/g.

**9.** Composition de la revendication 1, dans laquelle ledit polyarylate a une valeur de chlorure d'acide de 2 x $10^{-6}$ à 50 x $10^{-6}$ équivalent/g et une valeur d'acide de 30 x $10^{-6}$ à 100 x $10^{-6}$ équivalent/g.

**10.** Composition de la revendication 1, dans laquelle ledit polyarylate est un polyester aromatique comprenant du 2,2-bis(4-hydroxyphényl)propane, et de l'acide téréphtalique et/ou de l'acide isophtalique.

**11.** Composition de la revendication 2, dans laquelle ladite polyoléfine modifiée est un polymère d'oléfine contenant des groupes anhydride d'acide.

**12.** Composition de la revendication 2, dans laquelle ladite polyoléfine modifiée est un polymère d'oléfine contenant des groupes époxy.

**13.** Composition de la revendication 2, dans laquelle ladite polyoléfine modifiée est un mélange d'un polymère d'oléfine contenant des groupes anhydride d'acide et d'un polymère d'oléfine contenant des groupes époxy.

**14.** Composition de la revendication 13, dans laquelle ladite polyoléfine modifiée est un mélange de 0,8 à 30 parties en poids dudit copolymère d'oléfine contenant des groupes anhydride d'acide et de 0,2 à 10 parties en poids dudit copolymère d'oléfine contenant des groupes époxy.

**15.** Composition de la revendication 14, dans laquelle ladite polyoléfine modifiée est un mélange de 5 à 15 parties en poids dudit polymère d'oléfine contenant des groupes anhydride d'acide et de 0,2 à 3 parties en poids dudit polymère d'oléfine contenant des groupes époxy.

**16.** Composition de la revendication 13, dans laquelle ledit polymère d'oléfine contenant des groupes époxy est un polymère préparé à partir d'éthylène, d'un acrylate d'alkyle et de méthacrylate de glycidyle.

**17.** Composition de la revendication 13, dans laquelle ledit polymère d'oléfine contenant des groupes époxy est un polymère d'éthylène et de méthacrylate de glycidyle ayant une chaîne greffée comprenant un polymère vinylique qui a un poids moléculaire moyen en nombre de 10 à 10 000.

**18.** Composition de la revendication 17, dans laquelle ladite chaîne greffée est un polymère préparé à partir d'au moins un monomère choisi dans l'ensemble constitué de styrène, d'acrylonitrile, de méthacrylate de méthyle et d'acrylate de butyle.

**19.** Composition de la revendication 13, dans laquelle ledit polymère d'oléfine contenant des groupes époxy est polymère préparé à partir de méthacrylate de glycidyle et d'au moins un monomère choisi dans le groupe constitué de styrène, de méthacrylate de méthyle, d'acrylate d'éthyle, d'acrylate de butyle, d'acrylonitrile et d'acétate de vinyle.

**20.** Composition de la revendication 4, dans laquelle ledit composé contenant des groupes époxy (C) est un éther glycidylique d'un composé phénolique.

**21.** Composition de la revendication 4, dans laquelle ledit composé contenant des groupes époxy (C) est un éther phénylglycidylique.

**22.** Composition de la revendication 4, dans laquelle ledit composé contenant des groupes époxy (C) est un éther glycidylique d'un composé alcoolique.

**23.** Composition de la revendication 4, dans laquelle ledit composé contenant des groupes époxy (C) est une résine bisphénol A-époxy ayant un contenu en époxy compris entre 150 et 1000 g/équivalent.

**24.** Composition de la revendication 4, dans laquelle ledit composé contenant des groupes époxy est une résine époxy alicyclique.

**25.** Composition de la revendication 4, dans laquelle ledit composé contenant des groupes époxy est un éther glycidylique d'acide carboxylique aliphatique.

**26.** Composition de la revendication 1, dans laquelle ledit polyarylate a une viscosité intrinsèque (dans une solution de chloroforme, à 30°C) comprise entre 0,2 et 1,1.

**27.** Composition de la revendication 1, dans laquelle ledit polyarylate a une viscosité intrinsèque comprise entre 0,4 et 0,8.

**28.** Composition de la revendication 5, qui est une composition contenant 25 à 70% en poids dudit polyarylate, 70 à 25% en poids dudit polyamide et 3 et 30% en poids dudit modificateur d'impact.

**29.** Composition de la revendication 5, dans laquelle ledit polyarylate est un polyarylate comprenant des motifs de 1,1-bis(4-hydroxyphényl)phényléthane et/ou de 2,2-bis(4-hydroxyphényl)propane et des motifs d'acide isophtalique et/ou d'acide téréphtalique.

**30.** Composition de la revendication 1, dans laquelle ledit polyamide est du nylon 6.

**31.** Composition de la revendication 1, dans laquelle ledit polyamide est du nylon 66.

**32.** Composition de la revendication 5, dans laquelle ledit polyamide est du nylon 46.

**33.** Composition de la revendication 3, dans laquelle ledit copolymère par greffage d'enveloppe de noyau est un copolymère contenant des groupes époxy.